# EUROPÄISCHE PATENTSCHRIFT

(11) **EP 0 764 831 B1**
(45) Veröffentlichungstag und Bekanntmachung des Hinweises auf die Patenterteilung: **09.07.1997**
(21) Anmeldenummer: 95114940.0
(22) Anmeldetag: 22.09.1995
(51) Int. Cl.: G01F 1/00, G01F 1/58

(54) **Verfahren zum Herstellen eines Messrohrs eines magnetisch-induktiven Durchflussaufnehmers**
Method of manufacturing a measuring tube for an electro-magnetic flow sensor
Procédé de fabrication d'un tube de mesure pour un capteur électromagnétique de débit

(43) Veröffentlichungstag der Anmeldung: 26.03.1997
(73) Patentinhaber: Endress + Hauser Flowtec AG, CH-4153 Reinach BL 1 (CH)
(72) Erfinder: Unterseh, Roland, F-68300 Saint Louis (FR)
(74) Vertreter: Morstadt, Volker, Dipl.-Ing. c/o Endress + Hauser Flowtec AG

(56) Entgegenhaltungen:
- DE-A- 3 201 562
- GB-A- 1 111 981
- US-A- 4 329 879
- US-A- 5 403 533

## Beschreibung

Die Erfindung betrifft ein Verfahren zum Herstellen eines Meßrohrs eines magnetisch-induktiven Durchflußaufmehmers, das innen eine Isolierung und an jeweils einem Ende ein einen jeweiligen Metallflansch aufweisendes Metallrohr umfaßt.

Mit magnetisch-induktiven Durchflußmessern läßt sich bekanntlich der Volumendurchfluß einer elektrisch leitenden Flüssigkeit, die in einem Meßrohr fließt, messen. Der die Flüssigkeit berührende Teil des Meßrohrs ist elektrisch nicht-leitend, damit eine nach dem Faraday'schen Induktionsgesetz von einem Magnetfeld induzierte elektrische Spannung nicht kurzgeschlossen wird, falls das Meßrohr vollständig aus einem Metall bestünde, also die Flüssigkeit das Metall berührte. Dabei durchsetzt das Magnetfeld das Meßrohr i.a. senkrecht zu dessen Längsachse.

Metall-Meßrohre, die selbstverständlich nicht ferromagnetisch sein dürfen, um das Magnetfeld nicht zu stören, sind daher üblicherweise innen mit einer elektrisch nicht-leitenden Schicht als Isolierung versehen; bei Kunststoff- oder Keramik-Meßrohren ist diese Schicht somit nicht erforderlich.

Die erwähnte induzierte Spannung wird mittels galvanischen oder kapazitiven Elektroden abgegriffen. Dabei durchdringen galvanische Elektroden die Wand des Meßrohrs, so daß sie das Fluid berühren, während kapazitive Elektroden in die Wand des Meßrohrs so eingelasen sind, daß sie das Fluid nicht berühren, oder auf der Wand des Meßrohrs angeordnet sind.

In der US-A 54 03 533 ist ein Verfahren zum Herstellen eines innen eine Isolierung, jedoch keine Metallflansche aufweisenden Metall-Meßrohrs eines magnetisch-induktiven Durchflußaufmehmers beschrieben, wobei
- an jedem Ende des Meßrohrs jeweils ein mit jeweils einer äußeren Hinterschneidung versehene Rohrverdickung einstückig angeformt ist,
- in das Lumen des Meßrohrs ein Isolierrohr, das länger als das Meßrohr ist, passend eingezogen wird und
- die überstehenden Enden des Isolierrohrs über die Rohrverdickung bis in die jeweilige Hinterschneidung hinein gezogen werden, wo sie sich festkrallen und gegebenenfalls mittels eines Überwurfrings noch gesichert werden.

Ferner ist in der JP-B 5-48846, die auf die JP-A 61-294316 zurückgeht, ein innen eine Isolierung und Metallflansche aufweisendes Metall-Meßrohr eines magnetisch-induktiven Durchflußaufmehmers beschrieben,
- bei dem an jedem Ende der jeweilige Metallflansch einstückig angeformt ist,
   -- der an einer Frontseite Vorsprünge und/oder Vertiefungen aufweist,
      --- in welche Vertiefungen die Isolierung eingreift bzw.
      --- welche Vorsprünge von der Isolierung umgriffen sind.

Auch die DE-A 32 01 562 zeigt diese Ausbildung, zusätzlich jedoch noch jeweils eine Ausnehmung an derjenigen Innenseite jedes Flansches, die die Fortsetzung der Innenseite des Metall-Meßrohrs ist.

Schließlich offenbart die GB-A 11 11 981 die Auskleidung eines Metall-Meßrohrs eines magnetisch-induktiven Durchflußmessers für hoch leitfähige Flüssigkeiten mit einem Liner aus Stahl, dessen jeweiliges Ende glockenförmig aufgebogen ist und dadurch auf der Stirnfläche des jeweiligen Flansches aufliegt.

Es hat sich gezeigt, daß die ersten drei der oben erwähnten vorbeschriebenen Varianten für das Einbringen in und das endseitige Befestigen der Isolierung am Meßrohr weder den in der Praxis auftretenden Anforderungen an die Dichtheit der Verbindungsstelle zwischen Metallrohr und Isolierung, insb. im Flanschbereich, noch den Anforderungen an einfache und somit kostengünstige Herstellbarkeit genügen können.

Zur Lösung dieses Problems besteht die Erfindung daher in einem Verfahren zum Herstellen eines Meßrohrs eines magnetisch-induktiven Durchflußaufmehmers, das ein innen eine Isolierung gewünschter Dicke und an jeweils einem Ende ein einen jeweiligen Metallflansch aufweisendes Metallrohr umfaßt, wobei
- an jedem Ende des Metallrohrs jeweils einer der Metallflansche so über dessen Außenseite geschoben wird,
   -- daß eine Frontseite des Metallflansches über das jeweilige Ende des Metallrohrs um soviel vorsteht, wie mindestens der Dicke der Isolierung entspricht,
- eine jeweilige Rückseite des jeweiligen Metallflansches mit der Außenseite des Metallrohrs mechanisch fest und dicht verbunden wird,
- jeder Metallflansch vor dem Aufschieben auf das Metallrohr von der jeweiligen Frontseite her mit einer Eindrehung versehen wird,
   -- die an ihrem inneren Ende in eine erste Ringnut übergeht,
- in das Lumen des Metallrohrs ein Dorn eingebracht wird,
   -- dessen Durchmesser sich aus der gewünschten Wandstärke der Isolierung ergibt und
   -- der eine Einfüllöffnung und an jedem Ende einen Endflansch aufweist,
      --- der die jeweilige Eindrehung des Metallflansches frontseitig abdeckt,
- die Isolierung in flüssigem Zustand durch die Einfüllöffnung eingefüllt wird und
- die Isolierung erstarren gelassen sowie der Dorn entfernt wird.

Nach einer Weiterbildung der Erfindung kann in einem mittleren Bereich jeder Eindrehung eine zweite Ringnut erzeugt, in jede zweite Ringnut ein Dichtring eingelegt und ein Dorn verwendet werden, dessen jeweiliger Endflansch auch die jeweilige Eindrehung und den jeweiligen Dichtring abdeckt.

Nach einer anderen Weiterbildung der Erfindung kann vor dem Einbringen der Isolierung im Metallrohr ein diese mechanisch stabilisierendes Mittel angebracht werden, das bevorzugt ein Streckmetall-Gitter ist.

In Ausgestaltung der Erfindung kann ein übliches Transfer-Mold-Verfahren zum Einfüllen der Isolierung verwendet wird.

Ein Vorteil der Erfindung besteht u.a. darin, daß nach dem Erstarren der z.B. mittels des Transfer-Molding-Verfahrens eingebrachten Isolierung keine weiteren Verfahrensschritte zur Bearbeitung des Metallrohrs oder der Isolierung erforderlich sind.

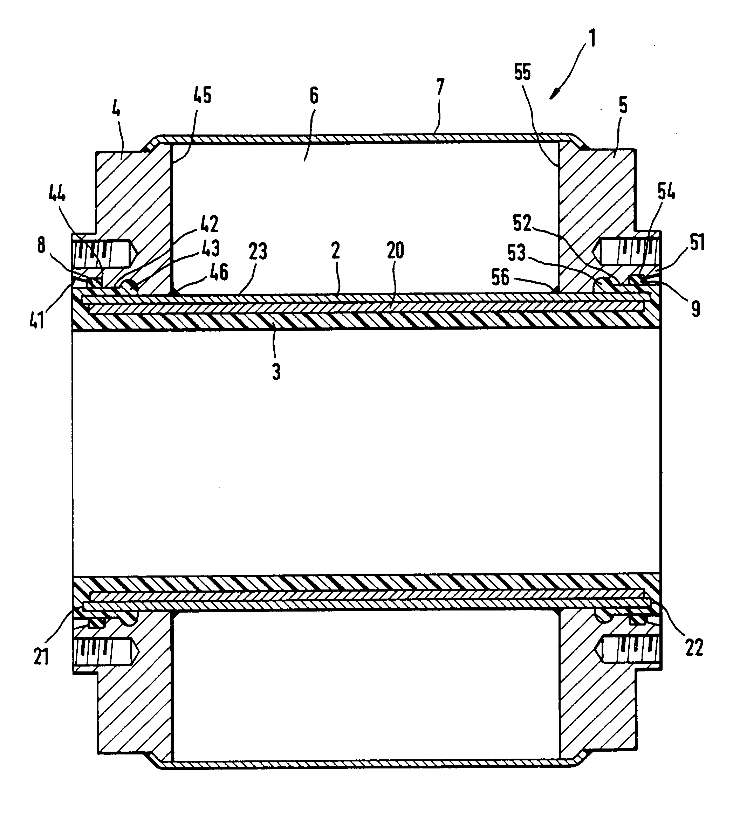

Die Erfindung wird nun anhand der Figur der Zeichnung näher erläutert, in der ein Ausführungsbeispiel eines nach dem Verfahern der Erfindung hergestellten Meßrohrs im Schnitt dargestellt ist.

Das in der Figur in geschnittener Längsansicht teilweise schematisch gezeigte Meßrohr 1 eines magnetisch-induktiven Durchflußaufnehmers ist in den Verlauf einer von einem zu messenden Fluid durchströmten, aus Gründen der Übersichtlichkeit jedoch nicht dargestellten Rohrleitung eines gegebenen Durchmessers einsetzbar. Die oben erwähnten Elektroden sind nicht dargestellt, da ihr Einbau erst nach Beendigung des Verfahrens der Erfindung erfolgt und somit außerhalb von deren Rahmen liegt.

Das Meßrohr 1 enthält ein Metallrohr 2, das innen eine Isolierung 3 gewünschter bzw. vorgegebener Dicke und an jeweils einem Ende einen jeweiligen Metallflansch 4, 5 aufweist. Nach einer Ausgestaltung der Erfindung ist im Metallrohr 2 ein Mittel 20 zur mechanischen Stabilisierung der Isolierung 3 angeordnet, das bevorzugt ein Streckmetall-Netz ist.

Metallrohr 2 und Metallflansche 4, 5 sind jeweils von kreisförmigem Querschnitt. Eine jeweilige Frontseite 41, 51 der Metallflansche 4, 5 steht über das jeweilige Ende 21, 22 des Metallrohrs 2 um soviel vor, wie mindestens der beabsichtigten Dicke der Isolierung 3 entspricht.

Der von den Metallflanschen 4, 5 und dem Metallrohr 2 gebildete Raum 6 ist mittels eines Bleches 7 verschlossen. Der Raum 6 dient üblicherweise zur Aufnahme der das erwähnte Magnetfeld erzeugenden Spulen und weiterer Komponenten. Wenn das Blech 7 Teil des Magnetkreises für das von den Spulen erzeugte Magnetfeld sein soll, ist das Blech 7 ferromagnetisch.

Jeder Metallflansch 4, 5 wird vor Beginn der Herstellung des Meßrohrs 1 von seiner jeweiligen Frontseite 41, 51 her mit einer Eindrehung 42, 52 versehen, die an ihrem inneren Ende in eine erste Ringnut 43, 53 übergeht. Entsprechend der erwähnten Weiterbildung ist beim Ausführungsbeispiel der Figur im mittleren Bereich jeder Eindrehung 42, 52 eine zweite Ringnut 44, 54 vorgesehen, die jeweils der Aufnahme eines Dichtrings 8, 9 dient.

Bei der Herstellung des Meßrohrs 1 selbst wird zunächst ein Metallrohr 2 mit der gewünschten Länge bereitgestellt, und es werden die Metallflansche 4, 5 wie oben angegeben vorbereitet (Eindrehungen 42, 52; erste Ringnuten 43, 53; gegebenenfalls zweite Ringnuten 44, 54).

Dann wird an jedem Ende 21, 22 des Metallrohrs 2 jeweils einer der Metallflansche 4, 5 so über dessen Außenseite 23 geschoben, daß, wie bereits erwähnt wurde, die jeweilige Frontseite 41, 51 des Metallflansches 4, 5 über das jeweilige Ende des Metallrohrs um soviel vorsteht, wie mindestens der gewünschten Dicke der Isolierung 3 entspricht.

Daraufhin wird eine jeweilige Rückseite 45, 55 des jeweiligen Metallflansches 4, 5 mit der Außenseite 23 des Metallrohrs 2 mechanisch fest und dicht verbunden. Dies kann durch Löten, Hartlöten oder Schweißen geschehen, was zu einer entsprechenden Löt-, Hartlöt- oder Schweißnaht 46, 56 führt. Anschließend wird gegebenenfalls in die zweite Ringnut 44, 54 der jeweilige Dichtring 8, 9, z.B. ein jeweiliger entsprechender O-Ring, eingelegt.

Nunmehr wird in das Lumen des Metallrohrs 2 ein in der Figur nicht dargestellter Dorn eingebracht, dessen Durchmesser sich aus der gewünschten Wandstärke der Isolierung 3 und aus dem Durchmesser des Lumens ergibt. Wenn also z.B. das Metallrohr 2 einen Innen-Durchmesser von 100 mm hat und die Isolierung 3 eine Wandstärke von 2 mm haben soll, muß der Dorn einen Durchmesser von 96 mm haben.

Der Dorn hat an jedem Ende einen Endflansch, der die jeweilige Eindrehung 42, 52 des Metallflansches 4,5 frontseitig abdeckt, also auf der jeweiligen Frontfläche 41, 51 des jeweiligen Metallflanschs 4, 5 aufliegt. Wenn die Dichtringe 8, 9 und somit auch die zweiten Ringnuten 44, 54 vorzusehen sind, muß jeder Endflansch des Dorns auch noch die jeweilige Eindrehung und den jeweiligen Dichtring abdecken.

Nunmehr wird über eine Einfüllöffnung des Dorns die Isolierung 3 in flüssiger Form eingebracht, was bevorzugt nach einem üblichen Transfer-Mold-Verfahren geschehen kann. Dabei wird also zunächst ein die Isolierung bildendes Thermoplast-Material verflüssigt und dann unter Druck in den vom Dorn freigelassenen Raum zwischen Metallrohr 2 und Metallflanschen 4, 5 einerseits und Dorn andererseits eingepreßt und darin erstarren gelassen.

Anstatt eines Transfer-Mold-Verfahrens können auch andere Verfahren angewendet werden, mit denen ein zunächst flüssiges Isoliermaterial, also meist ein entsprechender Kunststoff, eingefüllt wird, das dann erstarrt. Der Dorn wird nach dem Erstarren entfernt.

Nach dem Entfernen des Dorns bedeckt die Isolierung 3 nicht nur die gesamte Innenwand des Metallrohrs 2, sondern umgreift dessen jeweilige Frontseite 21, 22 und füllt sowohl die jeweilige Eindrehung 42, 52 als auch die jeweilige erste Ringnut 43, 53 vollständig aus. Ferner deckt die Isolierung 3 die gegebenenfalls vorhandenen Dichtringe 8, 9 ab und hält sie in einer Lage, in der sie die Dichtheit der Verbindung zwischen Isolierung 3 und jeweiligem Flansch 4, 5 erhöhen.

Das Verfahren der Erfindung eignet sich besonders gut für die Herstellung von Meßrohren mit Nennweiten im Bereich zwischen 10 mm und 200 mm.

## Patentansprüche

1. Verfahren zum Herstellen eines Meßrohrs (1) eines magnetisch-induktiven Durchflußaufnehmers, das innen eine Isolierung (3) gewünschter Dicke und an jeweils einem Ende (21, 22) ein einen jeweiligen Metallflansch (4, 5) aufweisendes Metallrohr (2) umfaßt, wobei
- an jedem Ende (21, 22) des Metallrohrs (2) jeweils einer der Metallflansche (4, 5) so über dessen Außenseite (23) geschoben wird,
-- daß eine Frontseite (41, 51) des jeweiligen Metallflansches über das jeweilige Ende des Metallrohrs um soviel vorsteht, wie mindestens der Dicke der Isolierung (3) entspricht,
- eine jeweilige Rückseite (45, 55) des jeweiligen Metallflansches mit der Außenseite (23) des Metallrohrs mechanisch fest und dicht verbunden wird,
- jeder Metallflansch vor dem Aufschieben auf das Metallrohr von der jeweiligen Frontseite her mit einer Eindrehung (42, 52) versehen wird,
-- die an ihrem inneren Ende in eine erste Ringnut (43, 53) übergeht,
- in das Lumen des Metallrohrs (2) ein Dorn eingebracht wird,
-- dessen Durchmesser sich aus der gewünschten Dicke der Isolierung ergibt und
-- der eine Einfüllöffnung und an jedem Ende einen Endflansch aufweist,
--- der die jeweilige Eindrehung (42, 52) des Metallflansches frontseitig abdeckt,
- die Isolierung (3) in flüssigem Zustand durch die Einfüllöffnung eingefüllt wird und
- die Isolierung erstarren gelassen wird sowie der Dorn entfernt wird.

2. Verfahren nach Anspruch 1, bei dem
- in einem mittleren Bereich jeder Eindrehung (42, 52) eine zweite Ringnut (44, 54) erzeugt wird,
- in jede zweite Ringnut ein Dichtring (8, 9) eingelegt wird und
- ein Dorn verwendet wird,
-- dessen jeweiliger Endflansch auch die jeweilige Eindrehung und den jeweiligen Dichtring abdeckt.

3. Verfahren nach Anspruch 1, bei dem vor dem Einbringen der Isolierung (3) im Metallrohr (2) ein dieses mechanisch stabilisierendes Mittel (20) angebracht wird.

4. Verfahren nach Anspruch 2, bei dem das Mittel (20) ein Streckmetall-Gitter ist.

5. Verfahren nach Anspruch 1, bei dem ein übliches Transfer-Mold-Verfahren zum Einfüllen der Isolierung verwendet wird.

## Claims

1. A process for manufacturing a measuring tube (1) of an electromagnetic flow sensor, said measuring tube comprising an insulation (3) of desired thickness on its inner surface and a metal tube (2) having a respective metal flange (4, 5) at each of its ends (21, 22), said process comprising the steps of:
- slipping the respective metal flange (4, 5) at each end (21, 22) of the metal (2) tube over the outside (23) of the latter in such a way
-- that a front side (41, 51) of the metal flange projects beyond the respective end of the metal tube by an amount at least equal to the thickness of the insulation (3);
- permanently and tightly joining a rear side (45, 55) of the respective metal flange to the outside of the metal tube;
- prior to slipping the metal flanges over the metal tube, providing each of the metal flanges, from the respective front side, with a flute (42, 52)
-- which forms a first annular groove (43, 53) at its inner end;
- introducing into the lumen of the metal tube (2) a mandrel
-- whose diameter is determined by the desired thickness of the insulation, and
-- which has a filler inlet and two end flanges, one at each end,
--- which cover the flutes (42, 52) of the respective flanges at the front side;
- filling in the insulation (3) through the filler inlet in a liquid state, and
- allowing the insulation to solidify and removing the mandrel.

2. A process as claimed in claim 1, further comprising the steps of:
- forming a second annular groove (44, 54) in a central region of each flute (42, 52);
- placing a sealing ring (8, 9) into every other annular groove; and
- using a mandrel
-- which has an end flange at each end which covers the respective flute and the respective sealing ring.

3. A process as claimed in claim 1 wherein prior to introduction of the insulation (3), a means (20) mechanically stabilizing the metal tube (2) is mounted in the metal tube.

4. A method as claimed in claim 2 wherein the means (20) is an expanded-metal lattice.

5. A process as claimed in claim 1 wherein the insulation is filled in using a conventional transfer-molding process.

## Revendications

1. Procédé de fabrication d'un tube de mesure (1) d'un capteur de débit magnéto-inductif, qui comprend, à l'intérieur, une isolation (3) d'une épaisseur donnée, et un tube métallique (2) présentant à chacune de ses deux extrémités (21, 22), un flasque métallique respectif (4, 5), dans lequel :
- à chaque extrémité (21, 22) du tube métallique (2), on emmanche sur le côté extérieur (23) de celui-ci, l'un des flasques métalliques (4, 5) de manière telle,
-- qu'un côté frontal (41, 51) du flasque métallique respectif dépasse de l'extrémité respectivement correspondante du tube métallique, d'une valeur correspondant au moins à l'épaisseur de l'isolation (3),
- on assemble, de manière fixe sur le plan mécanique et de façon étanche, le côté arrière (45, 55) respectif de chaque flasque métallique, au côté extérieur (23) du tube métallique,
- on munit chaque flasque métallique, avant son emmanchement sur le tube métallique, à partir du côté frontal considéré, d'une cavité détourée (42, 52),
-- qui à son extrémité intérieure se raccorde à une première gorge (43, 53),
- on introduit dans la lumière du tube métallique (2), un mandrin
-- dont le diamètre découle de l'épaisseur donnée pour l'isolation, et
-- qui comporte une ouverture de remplissage ainsi qu'à chaque extrémité, un flasque d'extrémité,
--- qui recouvre frontalement la cavité détourée respective (42, 52) du flasque métallique correspondant,
- on effectue le remplissage de l'isolation (3) à l'état liquide par l'ouverture de remplissage, et
- on laisse se solidifier l'isolation, et on retire le mandrin.

2. Procédé selon la revendication 1, suivant lequel
- dans une zone centrale de chaque cavité détourée (42, 52), on réalise une seconde gorge (44, 54),
- on dispose une bague d'étanchéité (8, 9) dans chacune des secondes gorges, et
- on utilise un mandrin
-- dont chacun des flasques d'extrémité recouvre également la cavité détourée et la bague d'étanchéité respectivement correspondantes.

3. Procédé selon la revendication 1, suivant lequel, avant l'introduction de l'isolation (3), on place dans le tube métallique (2), un moyen (20) le stabilisant sur le plan mécanique.

4. Procédé selon la revendication 3, suivant lequel le moyen (20) est un treillis de métal déployé.

5. Procédé selon la revendication 1, suivant lequel on met en oeuvre un procédé usuel de moulage par transfert, pour le remplissage de l'isolation.
